# EUROPEAN PATENT SPECIFICATION

(11) **EP 3 219 650 B1**
(45) Date of publication and mention of the grant of the patent: **03.03.2021**
(21) Application number: 15859536.3
(22) Date of filing: 11.11.2015
(51) Int. Cl.: B65G 47/19, B65G 65/42, B27N 1/02, B27N 3/14, G01G 11/12, G01G 13/295

(54) **DOUBLE-WEIGHING METERING STORAGE HOPPER**
DOPPELWIEGENDER DOSIERUNGSVORRATSBEHÄLTER
TRÉMIE DE STOCKAGE DE DOSAGE À DOUBLE PESAGE

(30) Priority: 11.11.2014 CN 201410632685
(43) Date of publication of application: 20.09.2017
(73) Proprietor: Shanghai Wood-based Panel Machinery Co., Ltd., Shanghai 201805 (CN)
(72) Inventor: LI, Maochun, Shanghai 201805 (CN); SHEN, Weixin, Shanghai 201805 (CN)
(74) Representative: Hartdegen, Helmut
(86) International application number: PCT/CN2015/094246
(87) International publication number: WO 2016/074612

(56) References cited:
- CH-A- 483 623
- CN-A- 101 934 914
- CN-A- 104 444 422
- CN-U- 201 903 388
- CN-U- 202 072 266
- CN-U- 203 269 110
- CN-U- 204 313 941
- DE-U1- 9 413 767
- JP-A- S5 940 213
- JP-A- 2004 198 225
- KR-A- 20040 000 998
- US-A- 4 948 322
- US-A- 5 477 957

## Description

### Technical Field

The invention relates to the technical field of shaving board manufacturing equipment and particularly relates to a double-weighing metering stock bin for shaving board production.

### Background Art

The metering stock bin which is a piece of major equipment on a shaving board production line is used for quantitatively and continuously feeding dried wood shavings into a glue mixer. At present, the metering stock bin used in shaving board production is rough and simple in metering mode, cannot meter quantitatively and greatly affects the follow-up glue mixing, so that the gluing amount cannot be accurately controlled, and therefore, the stability of the quality of the shaving board products is often affected as a result of non-uniform gluing.

JP S59 40213 A discloses a metering stock bin comprising a belt conveying mechanism, a stock bin body, a small range weighing mechanism, a feed inlet formed at a position in the top of the stock bin body close to the back end along the conveying direction of the belt conveying mechanism, and a discharge port is formed at a position in the bottom of the stock bin body close to the front end along the conveying direction of the belt conveying mechanism; the small range weighing mechanism is mounted in the belt conveying mechanism and is located behind the discharge port of the stock bin body; the belt conveying mechanism comprises a frame, a driving roll, a driven roll, a belt and a driving device; the belt encircles the driving roll and the driven roll. The document further discloses a material throwing device below the feed inlet in the stock bin body; the material throwing device comprises a material throwing roll bracket, a plurality of material throwing rolls ; the material throwing roll bracket is arranged obliquely in a way that the back end of the material throwing roll bracket is higher than the front end thereof; and the plurality of material throwing rolls are parallelly arranged on the material throwing roll bracket as shafts. CH 483 623 discloses a device for continuous measuring the supplied volume of a material on a conveying belt with a first and second measuring device, wherein the velocity of the conveying belt is controlled by a controlling device for a constant output material flow.

Therefore, the applicant conducts beneficial exploration and attempts and finds the method of solving the problems. The technical scheme to be introduced is generated under the background.

### Summary of the Invention

The invention aims to solve the technical problem: in order to solve the problem that the stability of the quality of the shaving board products is affected as the metering mode of the existing metering stock bin is rough and simple and cannot quantitatively meter, the invention provides a double-weighing metering stock bin which can meter precisely and quantitatively, ensure continuity, efficiency and energy conversation of production, and guarantee the stability of the quality of the products.

The technical problem to be solved by the invention can be solved by adoption of the technical scheme as follows:
A double-weighing metering stock bin includes a belt conveying mechanism, a stock bin body, a wide range weighing mechanism and a small range weighing mechanism, wherein the stock bin body is erected on the belt conveying mechanism, a feed inlet is formed at a position in the top of the stock bin body close to the back end along the conveying direction of the belt conveying mechanism, and a discharge port is formed at a position in the bottom of the stock bin body close to the front end along the conveying direction of the belt conveying mechanism; the wide range weighing mechanism is mounted in the belt conveying mechanism and is close to a position of the feed inlet of the stock bin body perpendicularly projected on the belt conveying mechanism; and the small range weighing mechanism is mounted in the belt conveying mechanism and is located behind the discharge port of the stock bin body, wherein the belt conveying mechanism includes a frame, a driving roll, a driven roll, a belt and a driving device; the driving roll shaft is arranged at the back end of the frame as a shaft, the driven roll shaft is arranged at the front end of the frame as a shaft, the belt encircles the driving roll and the driven roll, and the driving device is mounted on the frame and drives the driving roll to rotate, wherein the stock bin body is supported on the frame of the belt conveying mechanism by means of a stock bin rack; a material throwing device below the feed inlet in the stock bin body is arranged between the wide range weighing mechanism and the small range weighing mechanism; the material throwing device comprises a material throwing roll bracket, a plurality of material throwing rolls and a driving motor which drives the plurality of material throwing rolls to rotate; the material throwing roll bracket is obliquely arranged on the stock bin rack in a way that the back end of the material throwing roll bracket is higher than the front end thereof; the plurality of material throwing rolls are parallelly arranged on the material throwing roll bracket as shafts, and the driving motor is mounted on the frame and is in driving connection to each of the material throwing rolls and wherein the back end of the material throwing roll bracket is hinged to the stock bin rack while the front end thereof is mounted on the stock bin rack through a lifting adjustor; the lifting adjustor comprises a left adjusting vertical plate, a right adjusting vertical plate, an adjusting transverse plate, an adjusting mandrel, an adjusting screw and an upper adjusting bolt and a lower adjusting bolt; the left adjusting vertical plate and the right adjusting vertical plate are vertically arranged on the left side and the right side of the stock bin rack and are lower than the back end of the material throwing roll bracket; inclined holes are symmetrically formed in the left adjusting vertical plate and the right adjusting vertical plate; the adjusting mandrel is arranged at the front end of the material throwing roll bracket and two ends of the adjusting mandrel are placed in the inclined holes of the left adjusting vertical plate and the right adjusting vertical plate; the adjusting transverse plate is arranged on the stock bin rack and is located above the left adjusting vertical plate and the right adjusting vertical plate; the adjusting screw vertically penetrates through the adjusting transverse plate and is fixedly connected to the adjusting mandrel; and the upper adjusting bolt and the lower adjusting bolt are arranged on the adjusting screw in a screwing manner, respectively, and are located above and below the adjusting transverse plate.

In a preferred embodiment of the invention, the driving device is a variable frequency driving motor.

In a preferred embodiment of the invention, the axes of the plurality of the material throwing rolls are not in a same plane.

In a preferred embodiment of the invention, the wide range weighing mechanism includes a first metering scale and a supporting board unit; the supporting board unit is composed of a plurality of supporting boards which are successively arranged along the conveying direction of the belt conveying mechanism, the supporting board unit is located below the belt and supports part of the belt above the supporting board unit, and the first metering scale is mounted on the frame and is located below the back end of the supporting board unit.

In a preferred embodiment of the invention, a flexible pivot point for supporting the weight of the front end of the supporting board unit is arranged below the front end of the supporting board unit, the flexible pivot point supported on the frame.

In a preferred embodiment of the invention, the small range weighing mechanism includes a second metering scale, a weighing supporting board and a supporting board bracket; the weighing supporting board is mounted on the frame through the supporting board bracket and is located below the belt, and the second metering scale is mounted on the frame and is located below the weighing supporting board.

The double-weighing metering stock bin disclosed by the invention can meter accurately, material supply adjustment by the metering stock bin is facilitated, the requirement on stable material supply in shaving board production is satisfied, and the follow-up glue-mixing and forming section operate steadily.

### Description of the Drawings

In order to more clearly illustrate the embodiments or the technical schemes in the prior art, a brief introduction will be made to the drawings needed to be used for describing the embodiments or the prior art below. It is obvious that the following described drawings are only some embodiments of the invention. The common technicians in the field further can acquire other drawings according to the drawings on the premise of not contributing creative work.
Figure 1 is a schematic diagram of the double-weighing metering stock bin provided by the invention.
Figure 2 is a top view of the double-weighing metering stock bin provided by the invention.

### Detailed Embodiments

In order to make the technical means, creative characteristics, purposes and functions achieved by the double-weighing metering stock bin provided by the invention easily clear and understandable, the double-weighing metering stock bin provided by the invention is further illustrated below by combining the specific drawings.

The left and right directions described below are left and right sides viewed along the conveying direction of the belt conveying mechanism 100 unless other wide specified, and the front and back directions are further viewed along the conveying direction: the place at the far side is the front and the place at the near side is the back.

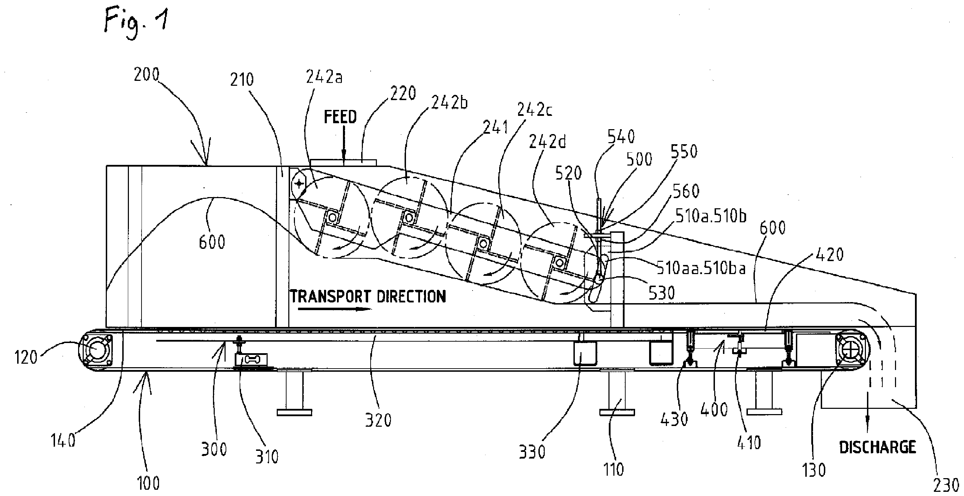

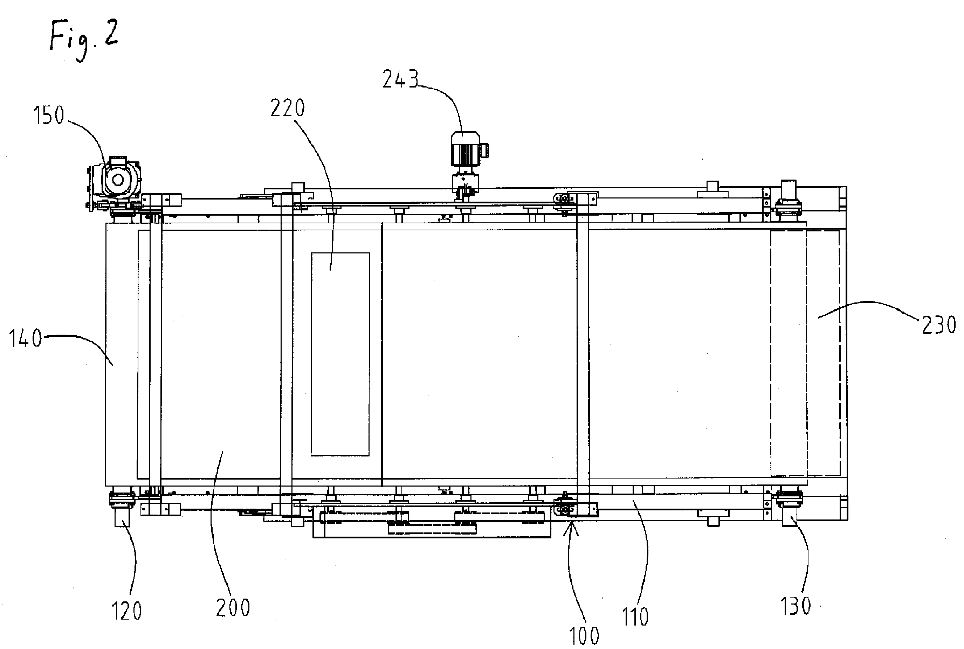

With reference to figure 1 and figure 2, a double-weighing metering stock bin is shown, including the belt conveying mechanism 100, the stock bin body 200, the wide range weighing mechanism 300 and the small range weighing mechanism 400.

The belt conveying mechanism 100 includes the frame 110, the driving roll 120, the driven roll 130, the belt 140 and the driving device 150. The drilling roll 120 is arranged at the back end of the frame 110 as the shaft, the driving roll 130 is arranged at the front end of the frame 110 as the shaft, the belt 140 encircles the driving roll 120 and the driven roll 130, the driving device 150 is mounted on the frame 110, the driving device 150 is preferably the variable frequency motor, the driving device 150 drives the driving roll 120 to rotate, the driving roll 120 drives the belt 140 to perform a winding movement around the driving roll 120 and the driven roll 130, and the moving speed of the belt 140 can be adjusted by virtue of the variable frequency motor according to different production requirements.

The stock bin 200 is supported on the frame 110 of the belt conveying mechanism 100 through the stock bin rack 210, and a feed inlet 220 is formed at a position, close to the back end along the conveying direction of the belt conveying mechanism 100, in the top of the stock bin body 200, and a discharge port 230 is formed at a position, close to the front end along the conveying direction of the belt conveying mechanism 100, in the bottom of the stock bin body 200. A material throwing device 240 below the feed inlet 220 in the stock bin body 200 is arranged between the wide range weighing mechanism 300 and the small range weighing mechanism 400 to be introduced below; the material throwing device includes a material throwing roll bracket 241, a plurality of material throwing rolls 242a, 242b, 242c and 242d and a driving motor 243 which drives the plurality of material throwing rolls 242a, 242b, 242c and 242d to rotate; the material throwing roll bracket 241 is obliquely arranged on the stock bin rack 210 in a way that the back end of the material throwing roll bracket 241 is higher than the front end thereof; the plurality of material throwing rolls 242a, 242b, 242c and 242d are parallelly arranged on the material throwing roll bracket 241 as shafts, and the driving motor 243 is mounted on the frame 110 and is in driving connection to each of the material throwing rolls 242a, 242b, 242c and 242d. The quantity of the material throwing rolls is not limited to the quantity specified in the embodiment, and the quantity is defined according to actual production needs. The axes of the material throwing rolls 242a, 242b, 242c and 242d are not in a same plane, and preferably, the axes of the material throwing rolls 242a and242b are not in a same horizontal plane; the height of the axis of the material throwing roll 242c is higher than that of the material throwing rolls 242a and 242b, and the height of the axis of the material throwing roll 242d is lower than that of the material throwing roll 242c, and therefore, the material throwing effect of the material throwing rolls 242a, 242b, 242c and 242d which are arranged like this is relatively good.

The back end of the material throwing roll bracket 241 is hinged to the stock bin rack 210 while the front end thereof is mounted on the stock bin rack 210 through a lifting adjustor 500; the lifting adjustor 500 includes a left adjusting vertical plate 510a, a right adjusting vertical plate 510b, an adjusting transverse plate 520, an adjusting mandrel 530, an adjusting screw 540 and an upper adjusting bolt 550 and a lower adjusting bolt 560; the left adjusting vertical plate 510a and the right adjusting vertical plate 510b are vertically arranged on the left side and the right side of the stock bin rack 541 and are lower than the back end of the material throwing roll bracket 241; inclined holes 510aa and 510ba are symmetrically formed in the left adjusting vertical plate 510a and the right adjusting vertical plate 510b; the adjusting mandrel 530 is arranged at the front end of the material throwing roll bracket 241 and two ends of the adjusting mandrel are placed in the inclined holes of the left adjusting vertical plate 510a and the right adjusting vertical plate 510b; the adjusting transverse plate 520 is arranged on the stock bin rack 210 and is located above the left adjusting vertical plate 510a and the right adjusting vertical plate 510b; the adjusting screw 540 vertically penetrates through the adjusting transverse plate 520 and is fixedly connected to the adjusting mandrel 530; and the upper adjusting bolt 550 and the lower adjusting bolt 560 are arranged on the adjusting screw 540 in a screwing manner, respectively, and are located above and below the adjusting transverse plate 520. When the heights of the material throwing rolls 242a, 242b, 242c and 242d need to be increased, the lower adjusting bolt 560 is unscrewed downward first, then the material throwing bracket 241 is lifted upward, and then the upper adjusting bolt 550 is screwed downward; when the heights of the material throwing rolls 242a, 242b, 242c and 242d need to be decreased, the upper adjusting bolt 550 is unscrewed first, then the material throwing bracket 241 naturally descends under the action of gravity, and then the lower adjusting bolt 560 is screwed upward.

The wide range weighing mechanism 300 is mounted in the belt conveying mechanism 100 and is close to a position of the feed inlet 220, perpendicularly projected on the belt conveying mechanism 100, of the stock bin body 200. The wide range weighing mechanism 300 includes a first metering scale 310 and a supporting board unit 320; the supporting board unit 320 is composed of a plurality of supporting boards which are successively arranged along the conveying direction of the belt conveying mechanism 100, the supporting board unit 320 is located below the belt 140 and supports part of the belt 141 above the supporting board unit, and the first metering scale 310 is mounted on the frame 110 and is located below the back end of the supporting board unit 320. A flexible pivot point 330 for supporting the weight of the front end of the supporting board unit is arranged below the front end of the supporting board unit 320; the flexible pivot point 330 is supported on the frame 110 and plays a weighing role in a deformed manner during weighing.

The small range weighing mechanism 400 is mounted in the belt conveying mechanism 100 and is located behind the discharge port 230 of the stock bin body 200. The small range weighing mechanism 400 includes a second metering scale 410, a weighing supporting board 420 and a supporting board bracket 430; the weighing supporting board 420 is mounted on the frame 110 through the supporting board bracket 430 and is located below the belt 140, and the second metering scale 410 is mounted on the frame 110 and is located below the weighing supporting board 420. The working principle of the double-weighing metering stock bin provided by the invention is as follows: wood shavings entering the feed inlet 220 of the stock bin body 200 are thrown out by the material throwing rolls 242a, 242b, 242c and 242d and fall onto the belt 140. Along with continuous backward material throwing of the material throwing rolls 242a, 242b, 242c and 242d and forward movement of the belt 140, the wood shavings are in a stacking state as shown in a wood shaving stacking state curve 600 in the figure 1 in the stock bin body 200. The wide range weighing mechanism 300 can roughly measure the amount of the wood shavings in the stock bin body 200 but is subjected to mounting position limitation and influence of rotatable material throwing of the material throwing rolls 242a, 242b, 242c and 242d, so that the metering result is not precise and the data can be used for controlling feeding of the stock bin body 200. The small range weighing mechanism 400 is mounted in front of the material throwing rolls 242a, 242b, 242c and 242d, and at the moment, the material is uniform in thickness, so that the weight of the material thereon can be accurately measured. The data can be used for adjusting the speed of the belt 140 of the belt conveying mechanism 100 and the heights of the material throwing rolls 242a, 242b, 242c and 242d so as to control the metering stock bin.

Above is the display and description of the basic principle and main characteristics as well as the advantages of the invention. Those skilled in the industry shall understand that the invention is not limited by the above embodiments and the embodiments and description only describe the principle explaining the invention. Various modifications and improvements of the invention can be made within a scope not departing from the spirit of the invention, and these modifications and improvements fall within the technical scope of the present invention. The scope of protection of the invention is defined by the appended claims and equivalents thereof.

## Claims

1. A double-weighing metering stock bin, comprising a belt conveying mechanism (100), a stock bin body (200), a wide range weighing mechanism (300) and a small range weighing mechanism (400),
wherein the stock bin body (200) is erected on the belt conveying mechanism (100), a feed inlet (220) is formed at a position in the top of the stock bin body (200) close to the back end along the conveying direction of the belt conveying mechanism (100), and a discharge port (230) is formed at a position in the bottom of the stock bin body (200) close to the front end along the conveying direction of the belt conveying mechanism (100);
the wide range weighing mechanism (300) is mounted in the belt conveying mechanism (100) and is close to a position of the feed inlet (220) of the stock bin body (200) perpendicularly projected on the belt conveying mechanism (100);
the small range weighing mechanism (400) is mounted in the belt conveying mechanism (100) and is located behind the discharge port (230) of the stock bin body (200);
the belt conveying mechanism (100) comprises a frame (110), a driving roll (120), a driven roll (130), a belt (140) and a driving device (150); the driving roll shaft is arranged at the back end of the frame as a shaft, the driven roll shaft is arranged at the front end of the frame as a shaft, the belt (140) encircles the driving roll (120) and the driven roll (130), and the driving device (150) is mounted on the frame and drives the driving roll (130) to rotate, wherein the stock bin body (200) is supported on the frame (110) of the belt conveying mechanism (100) by means of a stock bin rack (210);
a material throwing device (240) below the feed inlet (220) in the stock bin body (200) is arranged between the wide range weighing mechanism (300) and the small range weighing mechanism (400);
the material throwing device (240) comprises a material throwing roll bracket (241), a plurality of material throwing rolls (242a, 242b, 242c, 242d) and a driving motor (243) which drives the plurality of material throwing rolls (242a, 242b, 242c, 242d) to rotate; the material throwing roll bracket (241) is obliquely arranged on the stock bin rack (210) in a way that the back end of the material throwing roll bracket (241) is higher than the front end thereof; the plurality of material throwing rolls (242a, 242b, 242c, 242d) are parallelly arranged on the material throwing roll bracket (241) as shafts, and the driving motor (243) is mounted on the frame (110) and is in driving connection to each of the material throwing rolls (242a, 242b, 242c, 242d) and wherein the back end of the material throwing roll bracket (241) is hinged to the stock bin rack (210) while the front end thereof is mounted on the stock bin rack (210) through a lifting adjustor (500); the lifting adjustor (500) comprises a left adjusting vertical plate (510a), a right adjusting vertical plate (510b), an adjusting transverse plate (520), an adjusting mandrel (530), an adjusting screw (540)and an upper adjusting bolt (550) and a lower adjusting bolt (560); the left adjusting vertical plate (510a) and the right adjusting vertical plate (510b) are vertically arranged on the left side and the right side of the stock bin rack (210) and are lower than the back end of the material throwing roll bracket (541); inclined holes (510aa, 510ba) are symmetrically formed in the left adjusting vertical plate (510a) and the right adjusting vertical plate (510b); the adjusting mandrel (530) is arranged at the front end of the material throwing roll bracket (541) and two ends of the adjusting mandrel (530) are placed in the inclined holes (510aa, 510ba) of the left adjusting vertical plate (510a) and the right adjusting vertical plate (510b); the adjusting transverse plate (520) is arranged on the stock bin rack (210) and is located above the left adjusting vertical plate (510a) and the right adjusting vertical plate (510b); the adjusting screw (540) vertically penetrates through the adjusting transverse plate (520) and is fixedly connected to the adjusting mandrel (530); and the upper adjusting bolt (550) and the lower adjusting bolt (560) are arranged on the adjusting screw (540) in a screwing manner, respectively, and are located above and below the adjusting transverse plate (520).

2. The double-weighing metering stock bin according to claim 1, **characterized in that** the driving device (150) is a variable frequency driving motor.

3. The double-weighing metering stock bin according to claim 1, **characterized in that** the axes of the plurality of material throwing rolls (242a, 242b, 242c, 242d) are not on the same plane.

4. The double-weighing metering stock bin according to claim 1, **characterized in that** the wide range weighing mechanism (300) comprises a first metering scale (310) and a supporting board unit (320); the supporting board unit (320) is composed of a plurality of supporting boards which are successively arranged along the conveying direction of the belt conveying mechanism (100), the supporting board unit (320) is located below the belt (140) and supports part of the belt (140) above the supporting board unit (320), and the first metering scale (310)is mounted on the frame (110) and is located below the back end of the supporting board unit (320).

5. The double-weighing metering stock bin according to claim 4, **characterized in that** a flexible pivot point (330) for supporting the weight of the front end of the supporting board unit (320) is arranged below the front end, the flexible pivot point (330) supported on the frame (110).

6. The double-weighing metering stock bin according to claim 1, **characterized in that** the small range weighing mechanism (400) comprises a second metering scale (410), a weighing supporting board (420) and a supporting board bracket (430); the weighing supporting board (420) is mounted on the frame (110) through the supporting board bracket (420) and is located below the belt (140), and the second metering scale (410) is mounted on the frame (110) and is located below the weighing supporting board (420).

## Patentansprüche

1. Doppelwiege-Dosiervorratsbehälter, umfassend einen Bandfördermechanismus (100), einen Vorratsbehälterkörper (200), einen Weitbereichs-Wiegemechanismus (300) und einen Kleinbereichs-Wiegemechanismus (400),
wobei der Vorratsbehälterkörper (200) auf dem Bandfördermechanismus (100) errichtet ist, wobei ein Zufuhreinlass (220) an einer Position in der Oberseite des Vorratsbehälterkörpers (200) in der Nähe des hinteren Endes entlang der Förderrichtung des Bandfördermechanismus (100) gebildet ist und wobei eine Ausgabeöffnung (230) an einer Position im Boden des Vorratsbehälterkörpers (200) in der Nähe des vorderen Endes entlang der Förderrichtung des Bandfördermechanismus (100) gebildet ist;
wobei der Weitbereichs-Wiegemechanismus (300) in dem Bandfördermechanismus (100) montiert ist und sich in der Nähe einer Position des Zufuhreinlasses (220) des Vorratsbehälterkörpers (200) befindet, der senkrecht auf dem Bandfördermechanismus (100) vorragt;
wobei der Kleinbereichs-Wiegemechanismus (400) in dem Bandfördermechanismus (100) montiert ist und sich hinter der Ausgabeöffnung (230) des Vorratsbehälterkörpers (200) befindet; wobei der Bandfördermechanismus (100) einen Rahmen (110), eine Antriebswalze (120), eine angetriebene Walze (130), ein Band (140) und eine Antriebsvorrichtung (150) umfasst;
wobei die Welle der Antriebswalze am hinteren Ende des Rahmens als Welle angeordnet ist, wobei die Welle der angetriebenen Walze am vorderen Ende des Rahmens als Welle angeordnet ist, wobei das Band (140) die Antriebswalze (120) und die angetriebene Walze (130) umschließt und wobei die Antriebsvorrichtung (150) an dem Rahmen montiert ist und die Antriebswalze (130) zu einer Drehbewegung antreibt, wobei der Vorratsbehälterkörper (200) mittels eines Vorratsbehältergestells (210) auf dem Rahmen (110) des Bandfördermechanismus (100) abgestützt ist; wobei eine Materialwurfvorrichtung (240) unter dem Zufuhreinlass (220) in dem Vorratsbehälterkörper (200) zwischen dem Weitbereichs-Wiegemechanismus (300) und dem Kleinbereichs-Wiegemechanismus (400) angeordnet ist;
wobei die Materialwurfvorrichtung (240) eine Materialwurfwalzenhalterung (241), eine Vielzahl von Materialwurfwalzen (242a, 242b, 242c, 242d) und einen Antriebsmotor (243) umfasst, der die Vielzahl von Materialwurfwalzen (242a, 242b, 242c, 242d) zu einer Drehbewegung antreibt; wobei die Materialwurfwalzenhalterung (241) schräg auf dem Vorratsbehältergestell (210) angeordnet ist, sodass das hintere Ende der Materialwurfwalzenhalterung (241) höher ist als das vordere Ende davon; wobei die Vielzahl von Materialwurfwalzen (242a, 242b, 242c, 242d) parallel an der Materialwurfwalzenhalterung (241) als Wellen angeordnet sind und wobei der Antriebsmotor (243) an dem Rahmen (110) montiert ist und in Antriebsverbindung mit jeder der Materialwurfwalzen (242a, 242b, 242c, 242d) steht und wobei das hintere Ende der Materialwurfwalzenhalterung (241) an dem Vorratsbehältergestell (210) angelenkt ist, während das vordere Ende davon durch eine Hubeinstelleinrichtung (500) am Vorratsbehältergestell (210) montiert ist; wobei die Hubeinstelleinrichtung (500) eine linke vertikale Einstellplatte (510a), eine rechte vertikale Einstellplatte (510b), eine quer verlaufende Einstellplatte (520), einen Einstelldorn (530), eine Einstellschraube (540) und einen oberen Einstellbolzen (550) und einen unteren Einstellbolzen (560) umfasst; wobei die linke vertikale Einstellplatte (510a) und die rechte vertikale Einstellplatte (510b) vertikal auf der linken Seite und der rechten Seite des Vorratsbehältergestells (210) angeordnet sind und niedriger sind als das hintere Ende der Materialwurfwalzenhalterung (541); wobei geneigte Löcher (510aa, 510ba) symmetrisch in der linken vertikalen Einstellplatte (510a) und der rechten vertikalen Einstellplatte (510b) gebildet sind; wobei der Einstelldorn (530) am vorderen Ende der Materialwurfwalzenhalterung (541) angeordnet ist und zwei Enden des Einstelldorns (530) in den geneigten Löchern (510aa, 510ba) der linken vertikalen Einstellplatte (510a) und der rechten vertikalen Einstellplatte (510b) platziert sind; wobei die quer verlaufende Einstellplatte (520) an dem Vorratsbehältergestell (210) angeordnet ist und sich über der linken vertikalen Einstellplatte (510a) und der rechten vertikalen Einstellplatte (510b) befindet; wobei die Einstellschraube (540) die quer verlaufende Einstellplatte (520) durchdringt und mit dem Einstelldorn (530) fest verbunden ist; und wobei der obere Einstellbolzen (550) und der untere Einstellbolzen (560) jeweils in einer schraubenden Weise an der Einstellschraube (540) angeordnet sind und sich über und unter der quer verlaufenden Einstellplatte (520) befinden.

2. Doppelwiege-Dosiervorratsbehälter nach Anspruch 1, **dadurch gekennzeichnet, dass** die Antriebsvorrichtung (150) ein Antriebsmotor mit variabler Frequenz ist.

3. Doppelwiege-Dosiervorratsbehälter nach Anspruch 1, **dadurch gekennzeichnet, dass** die Achsen der Vielzahl von Materialwurfwalzen (242a, 242b, 242c, 242d) nicht auf der gleichen Ebene liegen.

4. Doppelwiege-Dosiervorratsbehälter nach Anspruch 1, **dadurch gekennzeichnet, dass** der Weitbereichs-Wiegemechanismus (300) eine erste Dosierwaage (310) und eine Stützplatteneinheit (320) umfasst; wobei die Stützplatteneinheit (320) aus einer Vielzahl von Stützplatten zusammengesetzt ist, die hintereinander entlang der Förderrichtung des Bandfördermechanismus (100) angeordnet sind, wobei sich die Stützplatteneinheit (320) unter dem Band (140) befindet und einen Teil des Bands (140) über der Stützplatteneinheit (320) stützt, und wobei die erste Dosierwaage (310) an dem Rahmen (110) montiert ist und sich unter dem hinteren Ende der Stützplatteneinheit (320) befindet.

5. Doppelwiege-Dosiervorratsbehälter nach Anspruch 4, **dadurch gekennzeichnet, dass** ein flexibler Schwenkpunkt (330) zum Stützen des Gewichts des vorderen Endes der Stützplatteneinheit (320) unter dem vorderen Ende angeordnet ist, wobei der flexible Schwenkpunkt (330) an dem Rahmen (110) abgestützt ist.

6. Doppelwiege-Dosiervorratsbehälter nach Anspruch 1, **dadurch gekennzeichnet, dass** der Kleinbereichs-Wiegemechanismus (400) eine zweite Dosierwaage (410), eine Wiegestützplatte (420) und eine Stützplattenhalterung (430) umfasst; wobei die Wiegestützplatte (420) durch die Stützplattenhalterung (420) an dem Rahmen (110) montiert ist und sich unter dem Band (140) befindet und wobei die zweite Dosierwaage (410) an dem Rahmen (110) montiert ist und sich unter der Wiegestützplatte (420) befindet.

## Revendications

1. Trémie de stockage et de mesure à double pesée, comprenant un mécanisme de transport à courroie (100), un corps de trémie de stockage (200), un mécanisme de pesée de gamme étendue (300) et un mécanisme de pesée de petite gamme (400),
dans laquelle le corps de trémie de stockage (200) est érigé sur le mécanisme de transport à courroie (100), une entrée d'alimentation (220) est formée à une position dans le haut du corps de trémie de stockage (200) près de l'extrémité arrière suivant la direction de transport du mécanisme de transport à courroie (100), et un orifice d'évacuation (230) est formé à une position dans le fond du corps de trémie de stockage (200) près de l'extrémité avant suivant la direction de transport du mécanisme de transport à courroie (100) ;
le mécanisme de pesée de gamme étendue (300) est monté dans le mécanisme de transport à courroie (100) et est près d'une position de l'entrée d'alimentation (220) du corps de trémie de stockage (200) en saillie perpendiculairement sur le mécanisme de transport à courroie (100) ;
le mécanisme de pesée de petite gamme (400) est monté dans le mécanisme de transport à courroie (100) et est situé derrière l'orifice d'évacuation (230) du corps de trémie de stockage (200) ;
le mécanisme de transport à courroie (100) comprend un cadre (110), un rouleau d'entraînement (120), un rouleau entraîné (130), une courroie (140) et un dispositif d'entraînement (150) ; l'arbre de rouleau d'entraînement est agencé à l'extrémité arrière du cadre en tant qu'arbre, l'arbre de rouleau entraîné est agencé à l'extrémité avant du cadre en tant qu'arbre, la courroie (140) encercle le rouleau d'entraînement (120) et le rouleau entraîné (130), et le dispositif d'entraînement (150) est monté sur le cadre et entraîne le rouleau d'entraînement (130) en rotation, dans laquelle le corps de trémie de stockage (200) est supporté sur le cadre (110) du mécanisme de transport à courroie (100) au moyen d'une crémaillère de trémie de stockage (210) ;
un dispositif de jet de matériau (240) en dessous de l'entrée d'alimentation (220) dans le corps de trémie de stockage (200) est agencé entre le mécanisme de pesée de gamme étendue (300) et le mécanisme de pesée de petite gamme (400) ;
le dispositif de jet de matériau (240) comprend une console de rouleau de jet de matériau (241), une pluralité de rouleaux de jet de matériau (242a, 242b, 242c, 242d) et un moteur d'entraînement (243) qui entraîne la pluralité de rouleaux de jet de matériau (242a, 242b, 242c, 242d) en rotation ; la console de rouleau de jet de matériau (241) est agencée à l'oblique sur la crémaillère de trémie de stockage (210) de manière à ce que l'extrémité arrière de la console de rouleau de jet de matériau (241) soit plus haute que son extrémité avant ; la pluralité de rouleaux de jet de matériau (242a, 242b, 242c, 242d) sont agencés en parallèle sur la console de rouleau de jet de matériau (241) en tant qu'arbres, et le moteur d'entraînement (243) est monté sur le cadre (110) et est en raccordement d'entraînement avec chacun des rouleaux de jet de matériau (242a, 242b, 242c, 242d) et dans laquelle l'extrémité arrière de la console de rouleau de jet de matériau (241) est articulée sur la crémaillère de trémie de stockage (210) tandis que son extrémité avant est montée sur la crémaillère de trémie de stockage (210) par le biais d'un dispositif de réglage de levage (500) ; le dispositif de réglage de levage (500) comprend une plaque verticale de réglage gauche (510a), une plaque verticale de réglage droite (510b), une plaque transversale de réglage (520), un mandrin de réglage (530), une vis de réglage (540) et un boulon de réglage supérieur (550) et un boulon de réglage inférieur (560) ; la plaque verticale de réglage gauche (510a) et la plaque verticale de réglage droite (510b) sont agencées verticalement sur le côté gauche et le côté droit de la crémaillère de trémie de stockage (210) et sont plus basses que l'extrémité arrière de la console de rouleau de jet de matériau (541) ; des trous inclinés (510aa, 510ba) sont formés symétriquement dans la plaque verticale de réglage gauche (510a) et la plaque verticale de réglage droite (510b) ; le mandrin de réglage (530) est agencé à l'extrémité avant de la console de rouleau de jet de matériau (541) et deux extrémités du mandrin de réglage (530) sont placées dans les trous inclinés (510aa, 510ba) de la plaque verticale de réglage gauche (510a) et de la plaque verticale de réglage droite (510b) ; la plaque transversale de réglage (520) est agencée sur la crémaillère de trémie de stockage (210) et est située au-dessus de la plaque verticale de réglage gauche (510a) et de la plaque verticale de réglage droite (510b) ; la vis de réglage (540) pénètre verticalement à travers la plaque transversale de réglage (520) et est raccordée fixement au mandrin de réglage (530) ; et le boulon de réglage supérieur (550) et le boulon de réglage inférieur (560) sont agencés sur la vis de réglage (540) par vissage, respectivement, et sont situés au-dessus et en dessous de la plaque transversale de réglage (520).

2. Trémie de stockage et de mesure à double pesée selon la revendication 1, **caractérisée en ce que** le dispositif d'entraînement (150) est un moteur d'entraînement à fréquence variable.

3. Trémie de stockage et de mesure à double pesée selon la revendication 1, **caractérisée en ce que** les axes de la pluralité de rouleaux de jet de matériau (242a, 242b, 242c, 242d) ne sont pas sur le même plan.

4. Trémie de stockage et de mesure à double pesée selon la revendication 1, **caractérisée en ce que** le mécanisme de pesée de gamme étendue (300) comprend une première bascule de mesure (310) et une unité de planche de support (320) ; l'unité de planche de support (320) est composée d'une pluralité de planches de support qui sont agencées successivement suivant la direction de transport du mécanisme de transport à courroie (100), l'unité de planche de support (320) est située en dessous de la courroie (140) et supporte une partie de la courroie (140) au-dessus de l'unité de planche de support (320), et la première bascule de mesure (310) est montée sur le cadre (110) et est située en dessous de l'extrémité arrière de l'unité de planche de support (320).

5. Trémie de stockage et de mesure à double pesée selon la revendication 4, **caractérisée en ce qu'**un point de pivotement flexible (330) pour supporter le poids de l'extrémité avant de l'unité de planche de support (320) est agencé en dessous de l'extrémité avant, le point de pivotement flexible (330) étant supporté sur le cadre (110).

6. Trémie de stockage et de mesure à double pesée selon la revendication 1, **caractérisée en ce que** le mécanisme de pesée de petite gamme (400) comprend une seconde bascule de mesure (410), une planche de support de pesée (420) et une console de planche de support (430) ; la planche de support de pesée (420) est montée sur le cadre (110) par le biais de la console de planche de support (420) et est située en dessous de la courroie (140), et la seconde bascule de mesure (410) est montée sur le cadre (110) et est située en dessous de la planche de support de pesée (420).
